# EUROPEAN PATENT APPLICATION

(11) **EP 0 987 660 A1**
(43) Date of publication of application: **22.03.2000**
(21) Application number: 99307019.2
(22) Date of filing: 03.09.1999
(51) Int. Cl.: G07F 7/10

(54) **Portable electronic apparatus**

(30) Priority: 14.09.1998 GB 9819935; 06.08.1999 GB 9918469
(71) Applicant: NCR INTERNATIONAL INC., Dayton, Ohio 45479 (US)
(72) Inventor: Woods, Sarah, London SW1 8QR (GB); Emmott, Stephen J., London SE1 9JL (GB); Johnson, Graham I., Fife DD6 9AA (GB)
(74) Representative: Cleary, Fidelma

(57) **Abstract**

A portable electronic apparatus (100) such as an electronic wallet comprises a plurality of connectors (118, 120, 202) to which a plurality of tokens are removably attachable, each token (118, 124, 216) having memory means (132, 230) containing data for use by the apparatus (100) in performing a respective function represented by that token (118, 124, 216). At least one of the connectors (118, 120, 202) is adapted for data communication with a token (118, 124, 216) attached thereto. The connectors (118, 120, 202) are arranged to display an array of attached tokens (118, 124, 216) for selection by a user. Pressure exerted by the user upon a token (118, 124, 216) selected from the array causes communication of data between the token (118, 124, 216) and the apparatus (100) to perform the function represented by that selected token (118, 124, 216).

Applied to an electronic wallet, for example, the invention aids public acceptance by allowing efficient, intuitive and familiar interaction with a user.

## Description

This invention relates to a portable electronic apparatus to be carried about the person, for example a portable banking apparatus such as an electronic wallet that carries electronic funds.

With much of the world in transition to a cashless society, there have been numerous proposals for portable banking apparatus such as electronic wallets. More generally, there has been a proliferation of portable electronic apparatus such as personal organisers and so on. Many such proposals employ today's cheapness of computer processing power and memory to provide functionality far beyond the basic ability to receive and transfer funds. A challenge is to simplify the use of such inherently complex devices, but existing proposals variously fail to meet that challenge.

EP 0 798 650 A2 to Motorola discloses a multi-functional electronic wallet incorporating facilities such as a pager, a recording device and a smart card reader. All facilities except those provided by the smart card itself are embodied within the wallet in software and hardware as appropriate. A variety of interactive displays are proposed to overcome the disadvantages of small display size. To this end, much of the inner area of the opened wallet is devoted to display purposes; user interaction elements such as control keys and input/output ports are relegated to edges of the wallet. The control keys interact with the display screens, whereby the user employs menus to control the wallet as desired.

The Motorola electronic wallet goes to some lengths to engender familiarity, for example by being embodied in a foldable leather-covered billfold form that includes provision for storage of cash and magnetic cards. However, its essential operation is little different to that of a personal organiser and hence is unfamiliar to the average user of an ordinary wallet. Specifically, activating any of its numerous functions involves several actions.

For example, if a smart card is to be read by the smart card reader, some (unspecified) activation operation must take place to read a card already stored in the reader. Presumably, some interaction with a displayed menu is involved, which requires several presses of the control keys in a correct sequence. Similarly, activation of internally stored functions such as a pager will again require entry of an accurate sequence of keystrokes to navigate the menu and reach the desired function. The situation is worse still if a desired smart card is not already in the smart card reader: the desired card must be found and taken from wherever it is stored, either within the wallet or elsewhere, and inserted into the smart card reader slot provided on the edge of the wallet. If a previously used smart card has been left in the reader, this must of course be removed and stored somewhere else. When the desired smart card is finally in place within the reader, it must be activated by following the menu as aforesaid.

All of these factors conspire against public acceptance of an electronic wallet such as Motorola's. The public may be reluctant to use the wallet if even the initial step of selecting a function requires menu navigation while peering at a small screen, particularly if the consequences of a wrong selection could be to debit the wrong account. Furthermore, the possible additional steps of inserting, removing and maybe losing a smart card are particularly unwelcome. Many would regard all this as being too elaborate to take place at the head of an impatient checkout queue. The public is used to the certainty of opening a wallet, seeing at a glance what that wallet contains, picking out whatever payment means is appropriate, and conducting a transaction using that payment means.

A further drawback of Motorola's electronic wallet is the procedure for altering its functionality, which appears to require data transfer using the input/output ports to re-program the wallet, or at least insertion of a different smart card for each new function that may be desired.

Other prior art proposals suffer from other inconveniences. For example, International Patent Application No. PCT/SE96/00414 entitled "Improvements in or relating to Electronic Wallets" to AU-System, published under serial number W096/32700, discloses a smart card that has money credits stored on it. The smart card resembles a subscriber information module (SIM) that is used in mobile telephones. By substituting the existing SIM (which contains subscriber information and so on) within a mobile telephone with the smart card containing money credits, a transaction may be carried out between the owner of the smart card and an electronic till. Money credits are either added to or subtracted from the smart card via the mobile telephone network. The advantage of this system over known payment systems involving cash stored on smart cards is that the holder of the smart card does not have to relinquish control of it in order to conduct a transaction.

The system described in W096/32700, however, has a number of drawbacks. Firstly, the removal and replacement of a SIM card in a mobile telephone is usually quite difficult. Understandably, the designers of mobile telephones do not wish such cards to be dislodged accidentally or stolen easily. Typically, therefore, the cards are located underneath a battery compartment. In order to conduct a transaction using such a mobile telephone, the user will have to slide the battery off, substitute the existing SIM card with a card containing electronic funds, replace the battery, instruct the system via the mobile telephone to conduct the relevant transaction, remove the battery, remove the card containing electronic funds, replace the original SIM card and replace the battery. It is clear that this is anything but convenient.

Secondly, problems with network congestion may occur. Congestion in mobile telephone networks is quite common. It would be extremely frustrating to be unable to complete a financial transaction because a channel was not available to the user of this electronic wallet. Furthermore, reception may also be poor in isolated areas and in steel-reinforced buildings and there is increasing reluctance among consumers to transmit high-powered microwave signals close to their body.

It is an object of the present invention to ameliorate the above drawbacks, especially by providing a more efficient, intuitive and familiar interaction with the user. Simply put, the invention seeks to provide bridging technology to aid public acceptance of portable electronic apparatus like electronic wallets.

With this aim in mind and from one aspect, this invention resides in a portable electronic apparatus comprising a plurality of connectors to which a plurality of tokens are removably attachable, each token having memory means containing data for use by the apparatus in performing a respective function represented by that token and at least one of the connectors being adapted for data communication with a token attached thereto, wherein the connectors are arranged to display an array of attached tokens for selection by a user and wherein pressure exerted by the user upon a token selected from the array causes communication of data between the token and the apparatus to perform the function represented by that selected token.

This aspect of the invention may also be expressed as a portable electronic apparatus comprising a plurality of connectors disposed beside one another in an array across a token attachment panel to which a plurality of tokens are removably attachable, each token having memory means containing data for use by the apparatus in performing a respective function represented by that token and at least two of the connectors being adapted for data communication with a token attached thereto, wherein the connectors are arranged to display an array of attached tokens for selection by a user, said selection being effected by touching or pressing a selected one of the tokens in the array that are attached to the connectors adapted for data communication, whereby said selection causes communication of data between the selected token and the apparatus for performing the function represented by the selected token.

Or, put another way, the invention resides in a portable electronic apparatus comprising a plurality of connectors to which a plurality of tokens are removably attachable for data communication with the apparatus, each token having memory means containing data for use by the apparatus in performing a respective function represented by that token, wherein the connectors are arranged to display an array of attached tokens for selection by a user, the array of tokens emulating an array of keys operable by the user to select the function represented by a selected token/key, data being communicated between the selected token and the apparatus to perform that function.

The function of a token may, for example, relate to one or more of the following: electronic funds transfer; address book; diary; driving licence; insurance details; medical details; club membership; passport details; authority to travel; store card details; credit card details; loyalty card details; electronic receipts; business cards; game.

By means of the invention, an electronic wallet or the like provides a simple and intuitive means for selection among the many functions that the wallet can support. The user need only open the wallet, view the array of tokens representing functions, and select an appropriate one of the tokens to activate the desired function. This is akin to using an ordinary wallet.

It is similarly easy to change the functionality of the wallet, simply by adding, removing or replacing tokens in the array. This is akin to loading an ordinary wallet in the morning with whatever credit cards, cash, passes, permits and so on may be needed to get through the day. Similarly, the wallet can readily be adapted to unusual circumstances such as going on holiday, for example by loading it with some tokens providing translation or currency conversion functions. This modularity adds greatly to the utility of the wallet.

The first aspect of the invention also encompasses a method of operating a portable electronic apparatus that comprises a plurality of connectors to which a plurality of tokens are removably attachable, each token having memory means containing data for use by the apparatus in performing a respective function represented by that token and at least one of the connectors being adapted for data communication with a token attached thereto, the method comprising viewing an array of attached tokens to find a desired token, and selecting the desired token by pressing or touching that token to cause communication of data between the selected token and the apparatus to perform the function represented by that selected token.

The portable electronic apparatus of the invention is preferably a banking apparatus or at least has banking functionality.

It is preferred that the tokens participate substantially in storing the data necessary to effect their functions, as this reduces memory demands upon the apparatus itself. Nevertheless, it is emphasised that a token need not store all of the data required by the apparatus to perform the function represented by that token. At one extreme, for example, a token could store no more than a unique identifier such as an ID code that is read by the apparatus when the token is pressed, the apparatus then running a program or routine stored within the apparatus to perform the desired function upon being so triggered. Accordingly, data stored by the memory means for use by the apparatus in performing a function need be no more than information necessary to distinguish one token from other tokens. Such information can be of any form that can be read or merely sensed by the apparatus.

According to a second aspect of the invention, there is provided a portable electronic apparatus to be carried about the person, the apparatus comprising: storage means for storing electronic funds; communication means for wireless communication with further, proximate means for wireless communication; and means for transferring electronic funds from the storage means via the communication means.

In the context of the present invention, proximate means in the immediate vicinity of a till or banking terminal, for example, or at least in the same building. The communication means is preferably one of infra-red, low-powered radio or an inductive loop. Communication will typically be with a point of sale (POS) terminal but may also be with a banking terminal such as an automatic teller machine (ATM) or even a further similar portable banking apparatus. The maximum range will typically be 50m or less and preferably 5m or less.

By providing the apparatus with a proximate communication means, the problems associated with using a mobile telephone are removed. An additional benefit of such communication means is that the apparatus will generally require less power than those intended to communicate with a cellular network. Where a battery is used, it can therefore be quite small. The apparatus is preferably provided with a rechargeable battery, which may be charged occasionally at the user's home or elsewhere. Where the communication means comprises an inductive loop it is possible for the power required to operate the unit to be provided via the loop.

The apparatus preferably has the appearance of a wallet, billfold or purse and is preferably pocket-sized.

The storage means for storing electronic funds preferably comprises a token containing non-volatile memory addressable by a microprocessor that is optionally also contained within the token. Examples of such tokens are a smart card as defined in e.g. ISO 7816, or an EEPROM such as those available from Xircom, Inc.

In a further preferred embodiment, the device is provided with at least two readers for tokens and still further preferably, the particular token functionality required may be obtained by pushing the token.

Since many people will put the wallet in a confined space about their person, such as a trouser pocket, some flexing of the wallet is bound to occur. Measures to prevent a token becoming disconnected during such flexing preferably include secondary location other than through the connector itself, so that reliable connection between the token and the connector may be assured when a user attaches the token thereto.

Recognition of the user may be performed, in one embodiment, by way of a biometrics device such as fingerprint or iris recognition. This provides a reliable way of guaranteeing the identity of the user and so may reduce fraudulent use of the wallet.

As a further preferred feature, a microphone and analogue-to-digital converter may be provided within the device. Instructions to the device could then be made by way of the user's voice. With the benefit of voice recognition, the unit could be arranged only to respond to a particular user, thus improving security.

By way of a still further preferred feature a game is provided, possibly on a token, to give the user something to do while he or she is waiting for something else. This may be particularly advantageous to a banking institution that issues the device to attract younger customers to the institution.

The invention extends to a token adapted for use in, or in combination with, apparatus as herein defined.

The second aspect of the invention may also be expressed as a method of altering the amount of electronic money stored in a portable electronic banking apparatus to be carried about the person, the method comprising: placing the apparatus in proximity to an external terminal; transferring electronic funds over a wireless communication channel existing directly between the external terminal and the apparatus.

Further preferred features of the present invention will be apparent to the skilled reader from the following.

The present invention will now be described, by way of example, with reference to the accompanying drawings in which:
Figure 1 shows a perspective view of a portable banking apparatus according to an embodiment of the present invention;
Figure 2 shows a block schematic diagram of the elements of the apparatus shown in Figure 1;
Figure 3 shows a flow chart of operation of a portable banking apparatus;
Figure 4 is a partially cut-away view showing a token display panel of an alternative embodiment of a portable banking apparatus;
Figure 5 shows the general arrangement of an alternative token design for use with the embodiment of Figure 4; and
Figures 6(a) to 6(c) show a progression of steps during attachment of the token of Figure 5 to a connector shown in Figure 4.

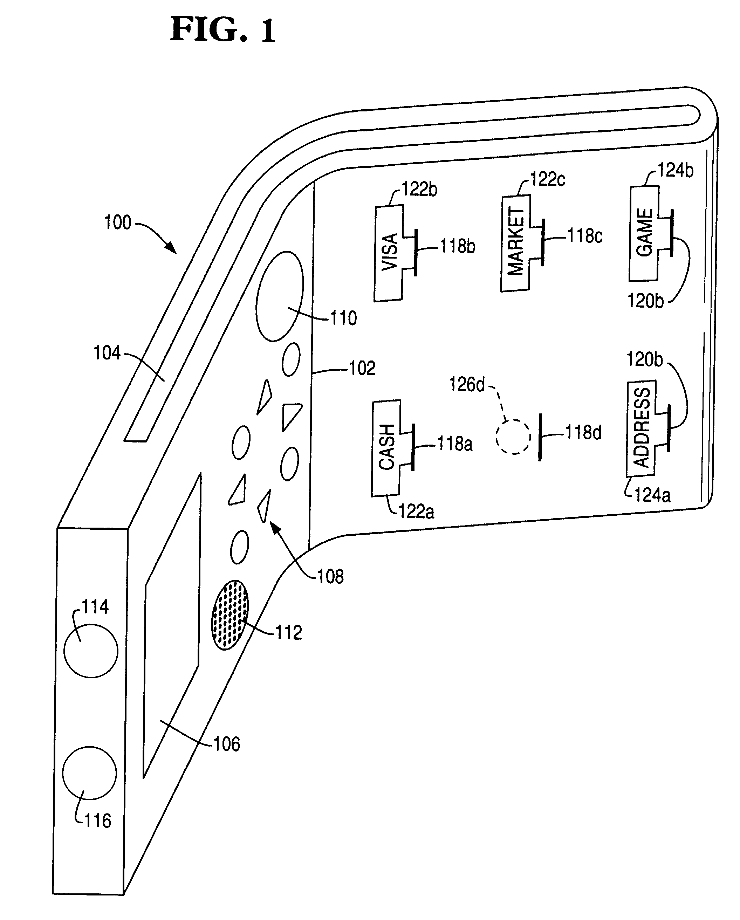

Figure 1 shows a portable electronic banking apparatus in the form of a wallet or billfold. Other arrangements of the device will be clear to the skilled person from the following description. For example, the device may be substantially rectangular and fold in half lengthways or the device may have an appearance of a woman's purse. The wallet 100 is shown in an open configuration but is intended to close around a bend 102 as with a traditional wallet. This will protect the screen, smart cards and so on described below.

Also in common with a traditional wallet, the apparatus includes a pocket 104 for bank notes. Distinct, however, from a traditional wallet the device also includes a screen such as a liquid crystal display 106, a set of input buttons 108, a fingerprint recognition device 110, a microphone 112, a transmitting infra-red LED 114, an infra-red light sensor 116, a plurality of token sockets or slots 118 and a plurality of token pockets 120.

The token sockets or slots 118 and the token pockets 120 function as connectors to which tokens 122 can be attached, although in this embodiment only the sockets or slots 118 permit data communication between the wallet 100 and a token 122.

The outer covering of the wallet 100 may be leather, simulated leather or fabric so that the device more closely resembles a conventional wallet. This covering preferably extends to the inner face exposed upon opening the wallet 100, which face carries the display 106, buttons 108 and so on.

The input buttons 108 may conveniently comprise four navigation buttons and four further buttons entitled "CANCEL", "CONFIRM", "MODE" and "TRANSMIT".

A transmitting LED 114 and infra-red light sensor 116 are to provide infra-red communications between the apparatus and an external apparatus. Typically, the external apparatus will be a point of sale (POS) terminal but it may also be a banking terminal such as an ATM or even a further portable banking apparatus. This latter feature allows individuals to exchange electronic funds between themselves, for example a husband and wife or parent and child. To ensure that communication is secure, the signals will usually be encrypted. A Blue Tooth (trade mark) protocol may be used.

The screen 106 is intended to convey information to the user, for example to show the user the current balance of electronic cash stored on a token to confirm to the user that a selected monetary amount is correct. Alternatively, the screen may be omitted and the relevant information read by the user from displays on the POS and/or ATM.

The fingerprint recognition device is intended to prevent unauthorised operation of the wallet. One or more matching fingerprints may be stored within the device for comparison with a fingerprint placed on the sensor 110. If no match is found the processor shuts down and consequently only an authorised user or users may use the wallet. Alternatively a different biometrics device may serve this function such as an iris recognition device.

In this embodiment a number of token read/write slots 118 are provided. Each of the slots 118 is adapted to receive and hold a token in an operating position for data communication with contacts within the slot 118. Examples of tokens 122 usable with the slots 118 are shown in the slots 118 and in the pockets 120. Each token 122 is generally T-shaped, having an enlargement in the form of a cross-bar from which a leg depends centrally and orthogonally. The leg and the enlargement are shaped and dimensioned such that the enlargement lies outside the slot 118 while the leg fits into the slot 118. The enlargement thereby acts as an abutment to register the token and the leg precisely is relation to the contacts within the slot 118.

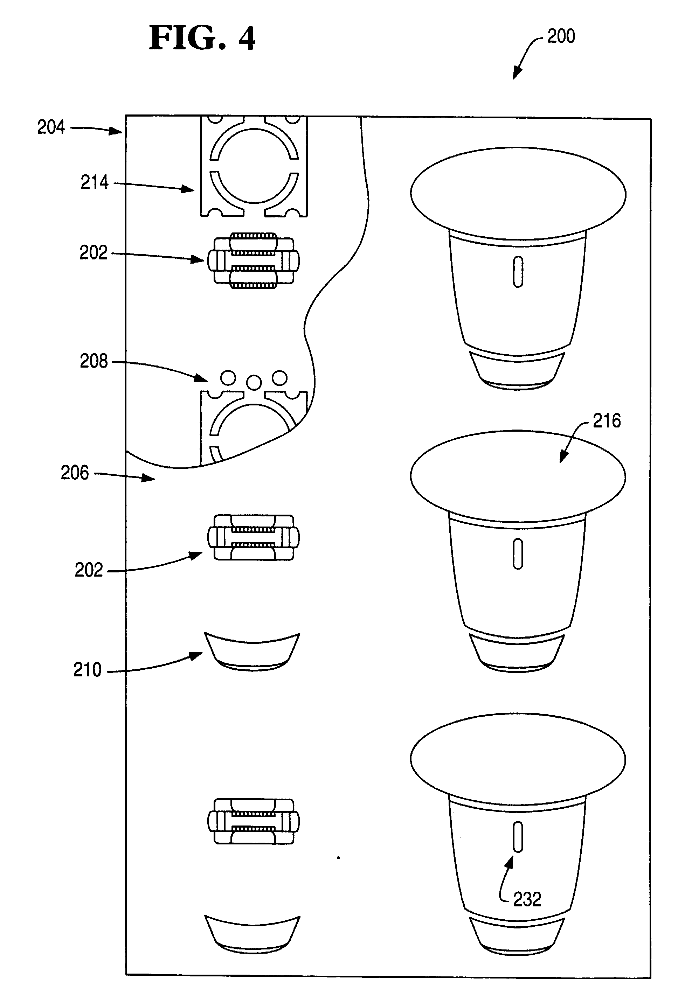

Whilst a T-shaped token 122 is shown in Figure 1, other shapes are possible: for example, the enlargement need not be a cross-bar but could be a tongue of circular or elliptical shape. Figures 4 to 6, which will be discussed below, disclose other token shapes.

Each token 122 carries a semiconductor chip that is connected to contacts on the leg for conductive engagement with the contacts within the slot 118 when the leg is inserted into the slot. Whilst it is possible that the chip and hence the appropriate functionality of a token 122 will be activated by and upon insertion, preferred embodiments of the invention provide for activation ofthe token 122 by a distinct operation once the token 122 is *in situ* within the slot 118. This allows tokens 122 to be switched on and off at will without insertion or removal being an essential step of the switching process. To this end, an operating switch lies adjacent to and just outside each slot 118 so as to lie underneath the enlargement 122 of a token when the leg ofthat token 122 is received in the slot 118.

To preserve the wallet style of the apparatus and to protect the switch, each switch is preferably hidden under a flexible cover, which is suitably the leather, imitation leather or fabric forming the covering of the apparatus. The switch is suitably a snap-dome switch to provide clear feedback to a user by feel and, with a click, by sound. Such a switch 126 is marked in dotted lines adjacent the empty slot 118d; corresponding switches 126 similarly adjacent to the other slots 118 are hidden by the tokens 122.

The switch 126 is operable in response to pressure applied by a user to flex or pivot a token 122 into engagement with the switch 126. In so doing, the token 122 can make a circuit to close the switch 126 and, with suitable contacts, can even form part of that circuit. However, it is much preferred for reasons of reliability that the token 122 does not form part of the circuit but simply bears upon the switch 126 to press one switch contact against another switch contact. The switch 126 is thus operated by pressure applied through the intermediary of the token 122 held by the slot 118.

Shown in slot 118a is a token 112a which contains e-cash, in slot 118b is a token 122b which holds the details of the user's VISA (trade mark) account, slot 118c holds details of the user's supermarket loyalty-scheme account, and slot 118d is empty as aforesaid. In an alternative embodiment, there may be only one token read/write slot 118 and the user may select the desired functionality by inserting the required token 122 in that slot 118.

Unused tokens 122 may be stored in storage slots or pockets such as slot 120a and 120b. In the embodiment shown these hold an address book 124a and a game 124b respectively. It is more convenient, however, if the user does not have to keep moving the tokens 122 from storage slots 120 into read/write slots 118. Consequently, in the embodiment illustrated in Figure 1, a compromise is provided. The most-frequently-used tokens 122 are provided with read/write slots 118 while those that are less commonly used are stored in storage slots 120. The less-commonly-used tokens 122 are then transferred to a read/write slot (such as 118d) when it is desired to use them. Preferably, each of the read/write slots has a switch 126 associated therewith. The token possessing the desired function can therefore be pressed by the user, which activates the banking apparatus in that particular mode of operation.

While a particular type of T-shaped smart card token is shown, these may be replaced by other types of token. For example, a smart card containing electronic cash known as a MONDEX (trade mark) card may be used. Alternatively, the tokens may comprise the aforementioned EEPROMs. Figures 4 to 6 illustrate exemplary token and switch arrangements in more detail.

The microphone 112 may be used for speech-recognition purposes as discussed below. Alternatively, it may be used to provide a pocket-memo type function whereby the voice of the user is recorded digitally (preferably onto a token 122) and later replayed. Where the recording occurs onto a token 122, the token 122 may be removed and given to a further human operator for transcription.

While an infra-red communication link is shown, the invention is not limited thereto. In an alternative embodiment, a low-power radio transceiver is provided. Suitable frequencies, modulation techniques and digital communications protocol for use therewith will be apparent to the skilled person. An extensible antenna may be provided for use with the transceiver.

As a further alternative, the communication means may comprise an inductive loop whereby the wallet is placed in close proximity to a POS or ATM. The communication then occurs magnetically. While this communications technique requires that the wallet and terminal be placed in much closer proximity, it has the advantage that energy may be transferred between the terminal and the wallet. Consequently, it may be possible to omit any power supply within the wallet (beyond that required to maintain non-volatile memory) or at least to reduce the frequency of replacement/recharging of batteries therein. Where a battery is provided within the device, this is preferably a rechargeable battery that may either be charged through an inductive loop or physical connection.

Where the communication means comprises a radio transceiver, the power (and hence range) thereof is limited to provide a range of no more than 50m and preferably no more than 5m. It is advantageous to limit the range so that criminals cannot easily intercept the encoded signals and "clone" the wallet.

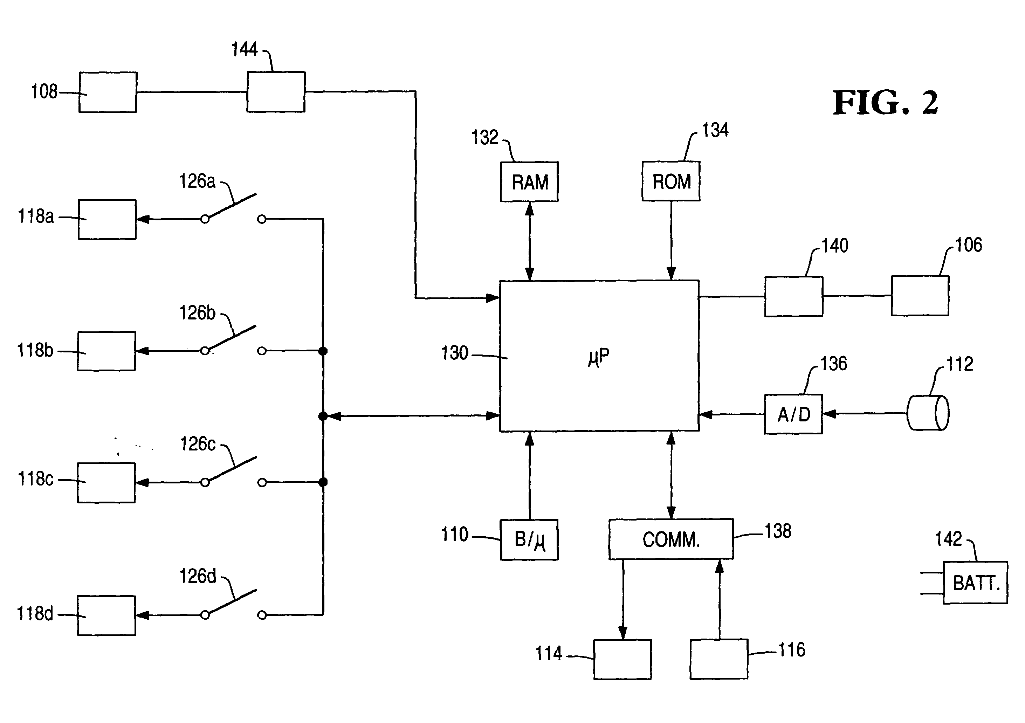

Figure 2 shows a block schematic diagram of the wallet 100 shown in Figure 1. Corresponding reference numerals are used to denote the same features. A microprocessor 130 is connected to random access memory (RAM) 132 and read only memory (ROM) 134. The microprocessor 130 is also connected to the four smart card read/write devices 118a, 118b, 118c and 118d via respective switches 126a, 126b, 126c and 126d. A biometrics device, such as a fingerprint recognition device 110, is connected to the microprocessor 130. A microphone 112 is connected via an analogue-to-digital converter (A/D) 136 and a communications unit 138 is connected between the infra-red transmitting LED 114, the infra-red receiver 116 and microprocessor 130. A display processor 140 is connected between the microprocessor 130 and the display 106 and an input processor 144 is connected between input buttons 108 and microprocessor 130. The display and buttons may be replaced by a touch screen display providing both functions. A rechargeable battery 142 provides the energy to operate the circuitry.

While schematic connections are shown between elements it will be understood that the circuits are connected by data and address buses. The skilled person will appreciate that the RAM 132, ROM 134, A/D 136, display processor 140 and communications hardware 138 may all be formulated on a common semiconductor chip. Any level of integration is possible but it is preferred that the level of integration is higher to reduce the amount of space required.

Preferably, the circuitry comprises surface mount devices, where possible, mounted on a flexible printed circuit board.

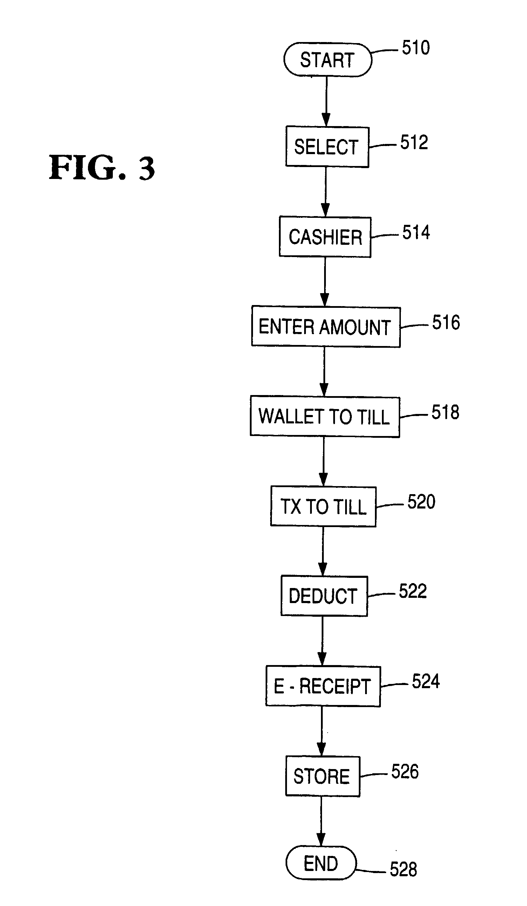

Figure 3 shows a flow chart of a transaction method in accordance with an embodiment of the second aspect of the present invention.

The procedure starts at step S10 and at step S12 the holder of the apparatus selects an item or items to purchase. At step S14 he or she gives these to the cashier in the shop who then registers the item or items with the till and requests the total funds from the apparatus holder. At step S16 the apparatus holder enters the amount into the wallet together with any authentication procedure such as fingerprint recognition. At step S18 the user points the apparatus at the till or point-of-sale terminal and the apparatus transmits the amount to the till. Alternatively, the till could be arranged to transmit the amount to the apparatus, the apparatus displays this to the user and the user then asked to confirm the amount is acceptable. At step S22 the electronic funds stored in the apparatus (in RAM, token 122 or whatever) are deducted by the requisite amount. Optionally, the apparatus may provide a warning to a user when the balance of electronic funds drops below a pre-determined level.

The user may receive a printed receipt from the cashier in the normal manner. However, as shown at step S24, it is preferred that the receipt is received electronically by the apparatus. This may be stored at step S26 in RAM or, preferably, in a further token 122 specifically for storing electronic receipts. Techniques for encrypting or otherwise validating the electronic receipt will be familiar to the skilled person. Alternatively or in addition an e-receipt may be sent, for example over the Internet, to the user's personal banking terminal (e.g. at home). The routine ends at step S28.

The user could check the recent transactions for which e-receipts are stored when required.

Re-charging the apparatus with electronic funds is performed in a similar manner. The user approaches a banking terminal such as an ATM or kiosk and requests the required amount of money. This could be requested via the apparatus or on the terminal keyboard. The terminal will, in the normal manner, determine whether such a withdrawal is permissible. In the case of an on-line ATM this will probably involve checking the user's current account balance while in an off-line ATM this will typically comprise limiting the withdrawal to a daily maximum.

The terminal will then transmit a signal corresponding to the funds dispensed and these will be stored in the apparatus. The user's current account will be debited in the normal manner.

Where other functionality is provided on the apparatus, this may be accessed by pushing the appropriate token 122, which has a switch 126 underneath, or by removing the token 122 from a storage pocket 120 and placing it in a read/write slot 118 within the apparatus 100. Where the token 122 holds an address book ,the user may scan through the contents thereof using the buttons 108 (Figure 1). Alternatively, a search function based on a forename or surname, for example, may be used.

Another possibility is e-business cards, again preferably stored on a token 122. These can then be exchanged between apparatuses in a similar manner to e-cash.

As a further alternative, the apparatus may comprise means for playing a game. Preferably, the software for the game is stored on a token 124 that may be stored in a read-write slot 118 or a storage pocket 120 as required. This token 124 may be activated in the same manner as that which carries the electronic funds. The game may be played solo or between two or more competitors. In a multi-player game each player may hold his or her own apparatus and they communicate via their communication means. Suitable games include: battleships; Tetris (trade mark); stone, paper, scissors; and noughts and crosses.

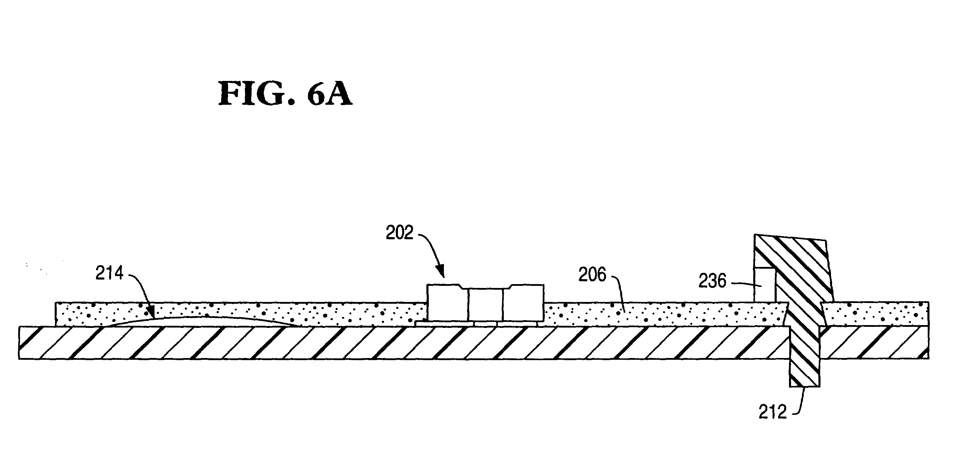

Referring now to Figures 4 to 6, in a further embodiment of the invention a wallet has features generally corresponding to those above and comprises a generally flat token display panel 200 carrying an array of connectors 202 side-by-side in rows and columns. The panel 200 comprises a PCB 204 carrying the connectors 202, and is covered by a layer of leather 206 (other flexible coverings such as imitation leather or textile are also possible in this embodiment) through which the connectors 202 project. The PCB 204 also provides mounting points 208 for an array of location feet 210, one for each connector. Each location foot 210 has lugs 212, visible in Figures 6(a) to 6(c), that extend through holes in the leather 206 and into the mounting points 208 in the PCB 204.

In the embodiment illustrated in Figures 4 to 6, each connector 202 is a Hirose Receptacle Connector DF16(2.0)-20DS-0.5V, although this is not essential.

A switch 214 is also associated with each connector 202 but on the opposite side of the connector 202 from the associated location foot 210. The switch 214 is a snap dome switch carried by the PCB 204 and concealed by the leather 206.

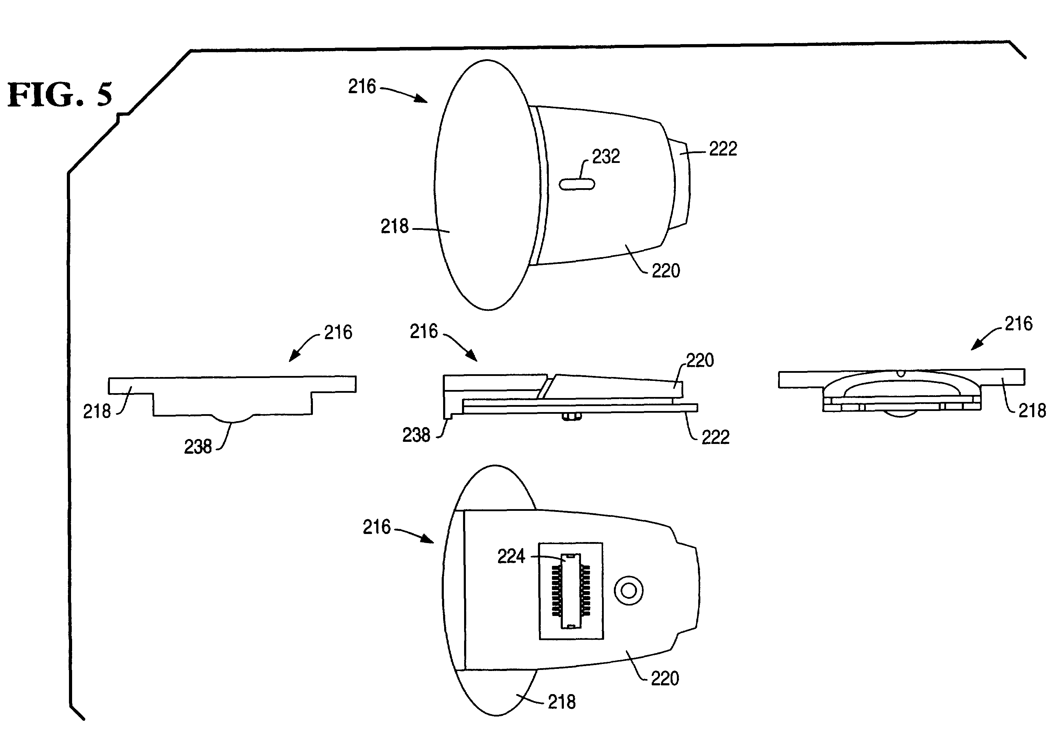

Referring now to the token 216 pictured in some detail in Figure 5, it will be seen that the token 216 is again generally T-shaped although, as will be apparent, this shaping is less functionally significant to the embodiment of Figures 4 to 6 than it is to the embodiment of Figure 1. The principal reasons for the T-shape of token 216 are twofold. The first reason is to create a large area that a user can press to activate the function represented by the token 216. This area is defined by the elliptical cross-bar 218, which takes the form of a generally flat plate. The second reason, a beneficial side-effect of the first, is to provide a large area bearing indicia (not shown) for identifying the token, for example indicia including a corporate logo. Of course, largeness is relative and it will be noted that the token 216 as a whole is very compact: preferably about 30mm in overall width and length, and about 5mm in thickness. So, the button or key defined by the cross-bar 218 of the T can be as small as about 30mm in width and 10mm in depth, or even smaller if an average user's fingers can cope.

It will also be noted that the token 216 has a leg 220 depending from the cross-bar 218. The leg 220 joins at one end to the middle of the cross-bar 218, which overlies that end of the leg 220 and defines an upper side of the token 216. The other, free end of the leg 220 is shaped into a location lug 222 that engages within a location foot 210 as will be explained. A connector element 224 is centrally disposed with respect to the leg 220 and is situated on the underside of the token 216.

Constructional features of the token 216 are evident from the sectional side views of Figures 6(a) to 6(c). The token 216 has a hollow case moulded in two parts 216A and 216B that shroud, sandwich and clamp a token PCB 226, the assembly being secured in conventional fashion by a screw 228 set into the underside of the token 216. The token PCB 226 carries an IC processor/memory 230 in communication with the connector element 224 and an LED indicator light 232 that is visible, when lit, through a window or aperture 234 provided in the upper side of the token 216. The LED 232 gives the operational status of the token, for example indicating to a user which token 216, of possibly several such tokens, carried by the token display panel 200 is active at any given moment.

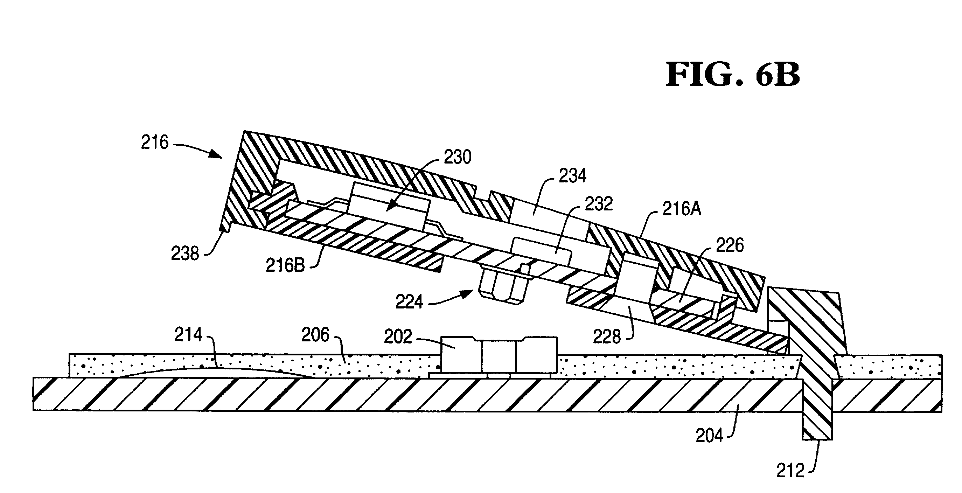

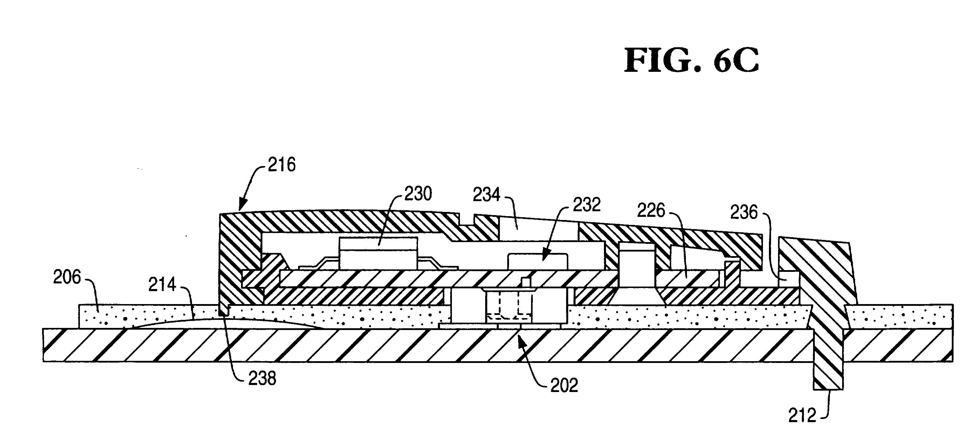

It will be seen from Figure 4 and particularly Figures 6(a) to 6(c) that each connector 202 including its associated formations such as the location foot 210 is adapted to receive a token 216 and to attach it to the token display panel 200. As the first step of attachment shown in Figure 6(b), the depending leg 220 of the T is engaged at its extremity with the location foot 210, the location lug 222 being received within a recess 236 in the location foot 210. Pivoting the token 216 about the point ofthis engagement brings the connector element 224 on the underside of the token 216 into alignment with the connector 202 for mating with (e.g. insertion into) the connector 202. It is then simply a matter of pressing down the cross-bar 218 of the token 216 to engage the connector element 224 with the connector 202, thus reaching the attached position shown in Figure 6(c). This is an equilibrium position in which the token 216 is attached to the panel 200, ready for activation and for data communication via the connector 202, but in which the switch 214 is not depressed.

When it is desired to select the function represented by the attached token 216, the cross-bar 218 is pressed further, bearing down on the leather 206 until the snap dome underneath clicks to close the switch 214. A signal is thereby generated to cause the electronics within the wallet to communicate with the selected token 216. An early stage of this communication may involve a token recognition routine, reading ID data held by the token.

To aid switch operation by concentrating the loading upon the snap dome, a projection 238 may be provided as shown in the underside of the token 216 at the end of the leg 220 under the cross-bar 218.

It will be evident that the movement ofthe token 216 from its equilibrium position into its switch-activating position is a rocking or pivoting motion akin to that of a seesaw. This motion takes place about the connector 202, which may be flexibly mounted to the PCB 204 for that purpose but which will, in any event, allow some play without compromising the reliability of the connection. Similarly, the recess 236 provided in the location foot 210 permits the necessary degree of free play for the location lug 222 at the end of the leg 220: it will be evident that pressing down the switch 214 end ofthe leg 220 causes the lug 222 end ofthe leg 220 to lift away from the panel 200 by a similar amount.

The present invention may be embodied in other specific forms without departing from the essential attributes thereof. Accordingly, reference should be made to the appended claims rather than to the foregoing specific description as indicating the scope of the invention.

## Claims

1. A portable electronic apparatus (100) comprising a plurality of connectors (118, 120, 202) to which a plurality of tokens (118, 124, 216) are removably attachable, each token (118, 124, 216) having memory means (132, 230) containing data for use by the apparatus (100) in performing a respective function represented by that token (118, 124, 216) and at least one of the connectors (118, 120, 202) being adapted for data communication with a token (118, 124, 216) attached thereto, wherein the connectors (118, 120, 202) are arranged to display an array of attached tokens (118, 124, 216) for selection by a user and wherein pressure exerted by the user upon a token (118, 124, 216) selected from the array causes communication of data between the token (118, 124, 216) and the apparatus (100) to perform the function represented by that selected token (118, 124, 216).

2. The apparatus (100) of Claim 1, wherein the function of a token (118, 124, 216) relates to one or more of the following: electronic funds transfer; address book; diary; driving licence; insurance details; medical details; club membership; passport details; authority to travel; store card details; credit card details; loyalty card details; electronic receipts; business cards; game.

3. The apparatus (100) of Claim 1 or Claim 2, further including token recognition means operable in performing the function represented by a selected token (118, 124, 216).

4. The apparatus (100) of any preceding Claim, wherein data communication with a selected token (118, 124, 216) takes place as a result of pressure exerted upon the token (118, 124, 216) when the token (118, 124, 216) has been attached to a connector (118, 120, 202) adapted for data communication.

5. The apparatus (100) of Claim 4, further including a token pressure sensor (126, 214) associated with said connector (118, 120, 202) and being operable upon sensing pressure on the attached token (118, 124, 216) to initiate the function represented by that token (118, 124, 216).

6. The apparatus (100) of Claim 5, wherein the sensor is a switch (126, 214) operable by movement of the attached token (118, 124, 216).

7. The apparatus (100) of Claim 6, wherein said movement of the attached token (118, 124, 216) is flexing or pivoting of the token (118, 124, 216) in relation to the apparatus.

8. The apparatus (100) of Claim 7, wherein the attached token (118, 124, 216) pivots about the connector (118, 120, 202).

9. The apparatus (100) of any preceding Claim, wherein the connectors (118, 120, 202) are disposed beside one another in an array across a token display panel (200) of the apparatus (100) and a pressing portion (218) of a selected attached token (118, 124, 216) is pressed toward the panel (200) to perform the function represented by that token (118, 124, 216).

10. The apparatus (100) of Claim 9 when appendant to Claim 8, wherein the pressing portion (218) of the token (118, 124, 216) is offset with respect to the connector (118, 120, 202) to cause said pivoting motion.

11. The apparatus (100) of any preceding Claim, further including token location means (210) associated with the connector (118, 120, 202).

12. The apparatus (100) of Claim 11, wherein the token location means engages part of the token (118, 124, 216) during attachment ofthe token (118, 124, 216) to the connector (118, 120, 202) and thereafter registers the token (118, 124, 216) with the connector (118, 120, 202) as attachment is completed.

13. The apparatus (100) of Claim 12, wherein the token (118, 124, 216) pivots about the token location means (210) during said attachment.

14. The apparatus (100) of any of Claims 11 to 13 when appendant to Claim 9, wherein the connector (118, 120, 202) about which the attached token pivots is intermediate the token location means (210) and the pressing portion (218) of the attached token (118, 124, 216).

15. The apparatus (100) of any of Claims 9 to 14 when appendant to Claim 5, wherein the sensor (126, 214) is adjacent to the connector (118, 120, 202) and is positioned to lie behind the pressing portion of a token (118, 124, 216) attached to the connector (118, 120, 202).

16. The apparatus (100) of Claim 15 when appendant to Claim 9, wherein the sensor (126, 214) is concealed within the display panel (200).

17. The apparatus (100) of Claim 15 or Claim 16, wherein the sensor (126, 214) is operable by pressure exerted through the intermediary of the token (118, 124, 216).

18. The apparatus (100) of any preceding Claim, wherein data communication with a selected token (118, 124, 216) takes place as a result of pressure exerted upon the token (118, 124, 216) during its attachment to a connector (118, 202) adapted for data communication.

19. The apparatus (100) of Claim 18, further including includes a token attachment sensor associated with said connector (118, 202) and being operable upon sensing attachment to initiate the function represented by the attached token (118, 124, 216).

20. The apparatus (100) of any preceding Claim, wherein at least two connectors (118, 202) are each adapted for data communication with an attached token (118, 124, 216) and wherein selection between the functions associated with the respective tokens (118, 124, 216) attached thereto is effected by pressing a selected one of those tokens (118, 124, 216).

21. The apparatus (100) of any preceding Claim, wherein at least one connector (120) is for holding a token (124) without providing for data communication with that token (124).

22. A portable electronic apparatus (100) comprising a plurality of connectors (118, 120, 202) disposed beside one another in an array across a token attachment panel (200) to which a plurality of tokens (118, 124, 216) are removably attachable, each token (118, 124, 216) having memory means (132, 230) containing data for use by the apparatus (100) in performing a respective function represented by that token (118, 124, 216) and at least two of the connectors (118, 202) being adapted for data communication with a token (118, 124, 216) attached thereto, wherein the connectors are arranged to display an array of attached tokens (118, 124, 216) for selection by a user, said selection being effected by touching or pressing a selected one of the tokens (118, 124, 216) in the array that are attached to the connectors (118, 202) adapted for data communication, whereby said selection causes communication of data between the selected token (118, 124, 216) and the apparatus for performing the function represented by the selected token (118, 124, 216).

23. A portable electronic apparatus (100) comprising a plurality of connectors (118, 202) to which a plurality of tokens (118, 124, 216) are removably attachable for data communication with the apparatus, each token (118, 124, 216) having memory means (132, 230) containing data for use by the apparatus in performing a respective function represented by that token (118, 124, 216), wherein the connectors (118, 202) are arranged to display an array of attached tokens (118, 124, 216) for selection by a user, the array of tokens (118, 124, 216) emulating an array of keys operable by the user to select the function represented by a selected token/key (118, 124, 216), data being communicated between the selected token (118, 124, 216) and the apparatus to perform that function.

24. The apparatus (100) of any preceding claim, comprising:
storage means (132, 230) for storing electronic funds;
communication means (132, 230) for wireless communication with further, proximate means for wireless communication; and
means for transferring electronic funds from the storage means (132, 230) via the communication means (132, 230).

25. The apparatus (100) of Claim 24, wherein the communication means (132, 230) has a maximum range of 50 metres or less.

26. The apparatus (100) of Claim 25, wherein the communication means (132, 230) has a maximum range of 5 metres or less.

27. The apparatus (100) of any of Claims 24 to 26, wherein the communication means (132, 230) is operable to communicate by one of infrared, radio waves and an inductive loop.

28. The apparatus (100) of any of Claims 24 to 27, wherein the storage means (132, 230) comprises a token (118, 124, 216).

29. The apparatus (100) of Claim 28, wherein at least one further token (118, 124, 216) is provided, which token (118, 124, 216) is arranged to provide an address book, diary, driving licence, insurance details, medical details, club membership, passport details, authority to travel, store card details, credit card details, loyalty card details, electronic receipts, business cards or a game.

30. The apparatus (100) of any preceding Claim, wherein the token (118, 124, 216) comprises an EEPROM.

31. The apparatus (100) of any preceding Claim, wherein the token (118, 124, 216) comprises a smart card.

32. The apparatus (100) of any preceding claim, and having the appearance of a wallet, billfold or purse.

33. The apparatus (100) of any preceding claim, and being pocket-sized.

34. The apparatus (100) of any preceding claim, wherein the apparatus is powered by a rechargeable battery.

35. The apparatus (100) of any preceding claim, further comprising a biometrics device for verifying the identity of the user.

36. The apparatus (100) of any preceding claim, further comprising a microphone (112).

37. The apparatus (100) of Claim 36, further comprising means for recording signals from the microphone (112) onto a token (118, 124, 216).

38. A token (118, 124, 216) adapted for use in, or in combination with, apparatus (100) as hereinbefore defined.

39. A method of operating a portable electronic apparatus (100) that comprises a plurality of connectors (118, 120, 202) to which a plurality of tokens (118, 124, 216) are removably attachable, each token (118, 124, 216) having memory means (132, 230) containing data for use by the apparatus (100) in performing a respective function represented by that token (118, 124, 216) and at least one of the connectors (118, 120, 202) being adapted for data communication with a token (118, 124, 216) attached thereto, the method comprising viewing an array of attached tokens (118, 124, 216) to find a desired token, and selecting the desired token (118, 124, 216) by pressing or touching that token to cause communication of data between the selected token (118, 124, 216) and the apparatus (100) to perform the function represented by that selected token (118, 124, 216).

40. A method of altering the amount of electronic money stored in apparatus (100) as hereinbefore defined, the method comprising:
placing the apparatus in proximity to an external terminal;
transferring electronic funds over a wireless communication channel existing directly between the external terminal and the apparatus (100).

41. A method as claimed in claim 40, wherein the external terminal is a point-of-sale terminal.

42. A method as claimed in claim 41, wherein the external terminal is a banking terminal.
